# DEMANDE DE BREVET EUROPEEN

(11) **EP 3 973 762 A1**
(43) Date de publication de la demande: **30.03.2022**
(21) Numéro de dépôt: 21198860.5
(22) Date de dépôt: 24.09.2021
(51) Int. Cl.: A01D 34/80

(54) **ENGIN DE COUPE**

(30) Priorité: 29.09.2020 FR 2009898
(71) Demandeur: Choc Solutions, 85420 Maillezais (FR)
(72) Inventeur: CHABRUT, Michel, 85420 MAILLEZAIS (FR)
(74) Mandataire: Ipsilon

(57) **Abrégé**

L'invention concerne un engin (1) de coupe à coupe rotative, tel qu'une débroussailleuse, ledit engin comportant un dispositif de génération (2) d'air comprimé; un conduit (3) d'air comprimé situé en aval du dispositif de génération (2) d'air comprimé; et un dispositif de coupe (4) rotatif entrainable en rotation par l'air comprimé issu du conduit (3) d'air comprimé. L'engin comprend aussi un dispositif (6) de sélection d'orientation du flux d'air comprimé.

## Description

### DOMAINE DE L'INVENTION

La présente invention concerne de manière générale les engins de coupe, par exemple des engins de motoculture. La présente invention concerne en particulier un engin portable, à coupe rotative, tel qu'une débroussailleuse.

### ART ANTERIEUR

Les engins de coupe, en particulier les engins portables à coupe rotative, tels que les débroussailleuses, sont particulièrement dangereux lorsqu'ils sont équipés d'organe de coupe rigide, tel que lame, disque ou similaire.

En effet, lorsque le couple transmis par l'élément moteur de la débroussailleuse à l'organe de coupe devient inférieur au couple résistant appliqué à l'organe de coupe, en particulier lors de la rencontre avec un obstacle tel qu'une pierre, il se produit une réaction violente de l'ensemble de la débroussailleuse.

Cette réaction peut, si l'opérateur ne se méfie pas, blesser ce dernier. Cette réaction peut se traduire par des déplacements incontrôlés et brutaux de la débroussailleuse, par la casse de l'organe de coupe, ou par la casse de tout ou partie d'éléments mécaniques inaptes à réagir à un arrêt brutal de la rotation de l'organe de coupe.

Le document US4696108A décrit une débroussailleuse avec un dispositif de coupe et un moteur. Il est prévu un mode de réalisation particulier selon lequel le moteur peut être configuré pour générer un flux d'air entraînant un moteur pneumatique qui actionne le dispositif de coupe.

La présente invention a pour but de proposer un nouvel engin de coupe permettant de pallier tout ou partie des problèmes exposés ci-dessus.

### RESUME DE L'INVENTION

A cet effet, l'invention a pour objet un engin de coupe à coupe rotative selon la revendication 1.

L'engin peut aussi comporter une ou plusieurs des caractéristiques suivantes prises dans toute combinaison techniquement admissible.

Selon une caractéristique avantageuse de l'invention, ledit dispositif de génération d'air comprimé comprend un moteur et un compresseur.

Selon une caractéristique avantageuse de l'invention, ledit engin comprend un embrayage disposé entre le moteur et le compresseur.

Selon une caractéristique avantageuse de l'invention, ledit compresseur comporte :
- un rotor à pales, encore appelé turbine, couplé à un arbre de sortie du moteur ; et
- une chambre de compression logeant le rotor à pales et présentant une entrée d'air et une sortie d'air.

Selon une caractéristique avantageuse de l'invention, ledit compresseur d'air est un compresseur axial.

Selon une caractéristique avantageuse de l'invention, ledit dispositif de génération d'air comprimé comprenant un moteur et un compresseur, ledit compresseur est un compresseur à pompe comportant un axe muni d'un vilebrequin couplé à un arbre de sortie du moteur sur lequel est fixé une bielle configurée pour actionner un piston dans une chambre de compression présentant une entrée et une sortie d'air.

Selon une caractéristique avantageuse de l'invention, le dispositif de coupe rotatif comprend :
- un dispositif à pales entrainable par l'air comprimé issu du conduit d'amenée ; et
- un outil de coupe couplé à la turbine pour être entrainé en rotation par la turbine.

Selon une caractéristique avantageuse de l'invention, ledit engin comprend un système de soupape de sécurité, disposé en amont de la sortie du conduit qui communique avec le dispositif de coupe, et configuré pour laisser s'échapper l'air lorsque la pression d'air est supérieure à une valeur seuil donnée.

Selon une caractéristique avantageuse de l'invention, ledit système de soupape de sécurité comprend un organe, tel qu'une bille ou un cylindre, rappelé par un ressort en position de fermeture d'au moins un orifice de passage d'air ménagé dans le conduit d'air comprimé et/ou dans une chambre communiquant avec le conduit d'air comprimé et logeant le cylindre et le ressort.

Selon une caractéristique avantageuse de l'invention, ledit conduit d'air comprimé présente une longueur au moins égale à 140 cm.

Selon une caractéristique avantageuse de l'invention, ledit engin comprend un carter de protection dans lequel est logé au moins partiellement le dispositif de coupe, ledit carter de protection étant muni d'une sortie d'air ortho-radiale par rapport à l'axe de rotation du dispositif de coupe.

Selon une caractéristique avantageuse de l'invention, ledit engin comprend aussi un corps tubulaire qui est raccordé au carter de protection et dans lequel le conduit d'air s'étend.

Selon une caractéristique avantageuse de l'invention, ledit engin comprend un dispositif de préhension, pour une préhension de l'engin par un utilisateur, fixé sur ledit corps tubulaire de l'engin entre le dispositif de sélection d'orientation du flux d'air comprimé et le système de soupape de sécurité.

### BREVE DESCRIPTION DES DESSINS

D'autres caractéristiques et avantages de l'invention ressortiront encore de la description qui suit, laquelle est purement illustrative et non limitative et doit être lue en regard des dessins annexés, sur lesquels :
- [Fig. 1] la Figure 1 est une vue schématique d'un engin de coupe selon un mode de réalisation de l'invention, ledit engin de coupe étant une débroussailleuse à entrainement d'outil de coupe par air comprimé ;
- [Fig. 2] la Figure 2 est une vue en coupe transversale d'une vanne de sécurité permettant de gérer le flux d'air comprimé d'un engin de coupe selon un mode de réalisation, ladite vanne de sécurité étant en position de fermeture ;
- [Fig. 3] la Figure 3 est une vue en coupe transversale de la vanne de sécurité de la Figure 2, en position d'ouverture de la vanne ;
- [Fig. 4] la Figure 4 est une vue d'un système de soupape de sécurité d'un engin de coupe selon un mode de réalisation de l'invention, en position fermée du système de soupape ;
- [Fig. 5] la Figure 5 est une vue d'un système de soupape de sécurité d'un engin de coupe selon un mode de réalisation de l'invention, en position ouverte du système de soupape ;
- [Fig. 6] la Figure 6 est une vue schématique de dessous d'une turbine d'entrainement d'un outil de coupe d'un engin de coupe selon un mode de réalisation de l'invention, la turbine étant entrainée en rotation sous l'effet de l'air comprimé ;
- [Fig. 7] la Figure 7 est une vue schématique en coupe d'une partie d'un engin de coupe selon un mode de réalisation de l'invention montrant une turbine d'entrainement d'un outil de coupe de l'engin de coupe.

### DESCRIPTION DETAILLEE

Le concept de l'invention est décrit plus complètement ci-après avec référence aux dessins joints, sur lesquels des modes de réalisation du concept de l'invention sont montrés.

Sur les dessins, la taille et les tailles relatives des éléments peuvent être exagérées à des fins de clarté. Des numéros similaires font référence à des éléments similaires sur tous les dessins. Cependant, ce concept de l'invention peut être mis en œuvre sous de nombreuses formes différentes et ne devrait pas être interprété comme étant limité aux modes de réalisation exposés ici. Au lieu de cela, ces modes de réalisation sont proposés de sorte que cette description soit complète, et communiquent l'étendue du concept de l'invention aux hommes du métier.

Une référence dans toute la spécification à « un mode de réalisation » signifie qu'une fonctionnalité, une structure, ou une caractéristique particulière décrite en relation avec un mode de réalisation est incluse dans au moins un mode de réalisation de la présente invention. Ainsi, l'apparition de l'expression « dans un mode de réalisation » à divers emplacements dans toute la spécification ne fait pas nécessairement référence au même mode de réalisation. En outre, les fonctionnalités, les structures, ou les caractéristiques particulières peuvent être combinées de n'importe quelle manière appropriée dans un ou plusieurs modes de réalisation.

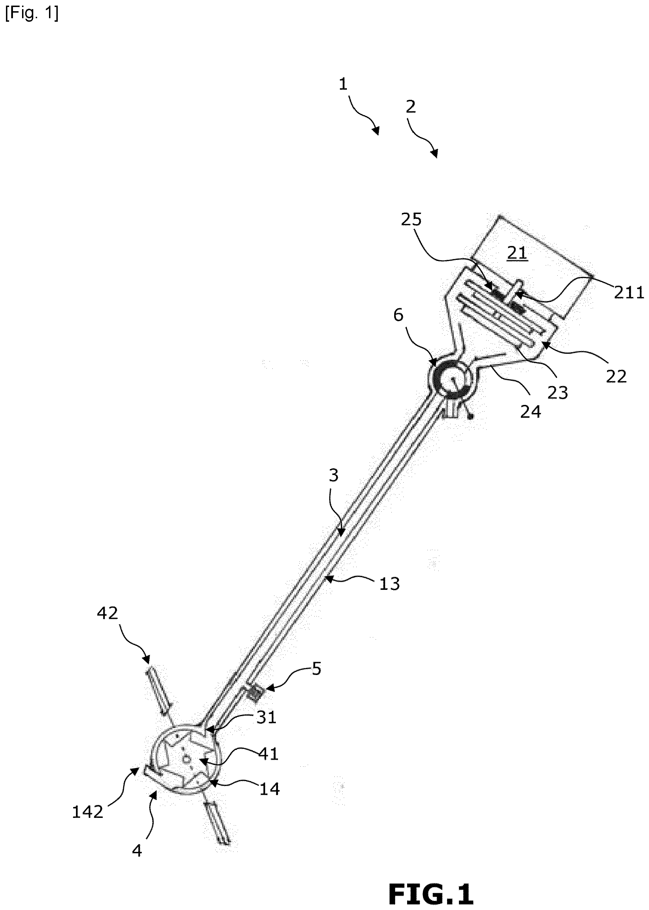

En référence aux figures, on a représenté en tant qu'engin de coupe, une débroussailleuse à transmission par air comprimé (voir Figure 1). Cependant, l'invention s'applique à d'autres engins de coupe à transmission par air comprimé, notamment d'autres engins de motoculture, qui comprennent aussi, comme détaillé ci-après, un dispositif de coupe rotatif, un dispositif de génération d'air comprimé et un conduit permettant d'amener l'air comprimé vers le dispositif de coupe pour l'entrainer en rotation. L'invention peut s'appliquer à un engin d'un tracteur équipé d'un dispositif de coupe avec des lames rotatives.

Un tel mode de transmission par air comprimé permet de limiter les vibrations qui sont sources de troubles musculo - squelettiques. Une telle conception de l'engin permet une utilisation en souplesse de l'engin avec effet de débrayage automatique en cas de choc, ce qui réduit le risque de dégradation des pièces mécaniques et apporte une sécurité d'utilisation pour l'utilisateur.

La transmission par air comprimé permet de ne pas avoir de problématique de temps de débrayage du dispositif de coupe et, lorsque l'obstacle est écarté, d'obtenir l'entrainement du dispositif de coupe dans un temps court.

Ainsi, une situation de chocs du dispositif de coupe contre un obstacle n'entraine pas la casse des éléments mécaniques de la débroussailleuse du fait que l'organe de coupe est en liaison fluidique et non pas mécanique avec le moteur.

L'utilisateur bénéficie ainsi d'un confort de travail optimal en évitant les à-coups et rebonds avec le risque de perte de la maîtrise de l'engin, en particulier dans le cas d'une débroussailleuse.

La solution d'entrainement par air comprimé du dispositif de coupe permet aussi de réduire les vibrations de façon significatives pour diminuer les risques de troubles musculosquelettiques pour l'utilisateur d'un tel engin.

### Dispositif de génération d'air comprimé

La débroussailleuse comprend un dispositif de génération 2 d'air comprimé.

Le dispositif de génération 2 d'air comprimé peut comprendre un compresseur d'air motorisé (de type turbine ou pompe).

Dans l'exemple illustré à la figure 1, le compresseur est du type compresseur à turbine.

Le compresseur d'air motorisé comprend un moteur 21 (thermique ou électrique) et un compresseur d'air. Le compresseur comporte un rotor à pales 22, encore appelé turbine, couplé à un arbre 211 de sortie du moteur 21 pour pouvoir être entrainé par le moteur 21. Le compresseur comprend une chambre de compression 24 logeant le rotor à pale 22 et présentant une entrée d'air et une sortie d'air.

En particulier, dans l'exemple illustré aux figures, le compresseur d'air est un compresseur axial. Ainsi comme illustré à la Figure 1, le rotor à pales comprend plusieurs étages 23 de compression permettant d'augmenter le taux de compression de l'air le long de l'axe de la chambre de compression (axe du rotor) pour pouvoir fournir au conduit 3 l'air comprimé nécessaire à l'entrainement du dispositif de coupe 4.

D'autres types de dispositif de génération d'air comprimé incluant un compresseur à turbine ou à pompe peuvent être envisagés.

Comme illustré à la figure 1, un embrayage 25 est disposé entre le moteur 21 et le rotor à pales 22 du compresseur pour permettre que, au démarrage du moteur, le dispositif de coupe ne tourne pas. L'opérateur peut ensuite commander l'embrayage, qui est par exemple de type centrifuge, en accélérant de manière à faire tourner le dispositif de coupe.

Comme indiqué ci-dessus, en variante, le compresseur peut être un compresseur à pompe (non représenté aux figures). Le compresseur à pompe comporte un axe avec vilebrequin couplé à un arbre de sortie moteur sur lequel est fixé une bielle qui actionne un piston dans une chambre de compression présentant une entrée et une sortie d'air.

### Conduit d'air comprimé

La débroussailleuse 1 comprend un conduit 3 d'air comprimé situé en aval du dispositif de génération 2 d'air comprimé par référence au sens d'écoulement de l'air comprimé. Le conduit 3 peut communiquer par l'intermédiaire d'une vanne de sécurité (présentée ci-après) avec une sortie de la chambre de compression 24 pour conduire l'air comprimé vers le dispositif de coupe 4.

Selon un mode de réalisation, le conduit 3 présente une longueur supérieure à 140 cm. On peut prévoir que la longueur du conduit 3 soit comprise entre 140 et 170 cm.

Le conduit 3 d'amenée présente une portion 31 de sortie, qui peut être inclinée par rapport au reste du conduit 3, pour expulser l'air comprimé sur les pales du dispositif de coupe 4, de préférence de manière sensiblement ortho-radiale par référence à l'axe de rotation du dispositif de coupe 4.

### Vanne de sécurité

Dans l'exemple illustré aux Figures 1 à 3, l'engin comprend un dispositif 6 de sélection d'orientation du flux d'air comprimé interposé entre le dispositif de génération 2 d'air comprimé et le conduit 3 de transmission.

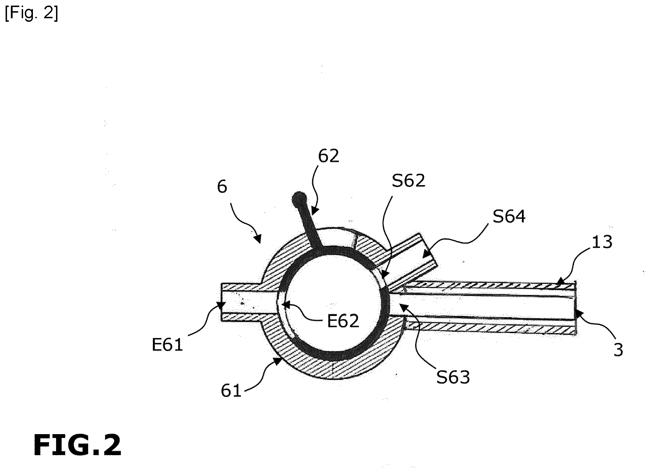

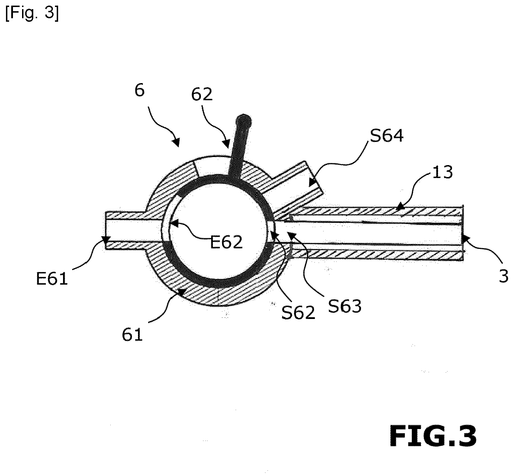

Le dispositif 6 de sélection d'orientation permet à l'utilisateur de choisir de guider le flux d'air comprimé qui sort du dispositif de génération 2 d'air comprimé :
soit vers le conduit 3 de transmission et donc vers la turbine 41 (présentée ci-après) d'entraînement de l'organe de coupe 42 afin d'entraîner en rotation l'organe de coupe 42 (Figure 3),
soit hors de l'engin avant qu'il n'atteigne la turbine 41 d'entraînement de l'organe de coupe (Figure 2).

Autrement dit, ce dispositif 6 de sélection d'orientation permet à l'air comprimé de s'échapper latéralement par référence à l'axe longitudinal du conduit 3 de transmission. L'utilisateur peut ainsi choisir d'activer ou non l'entraînement de l'organe de coupe 42 par air comprimé à l'aide de ce dispositif 6 de sélection.

Ce dispositif 6 de sélection comprend en particulier un élément creux 61 formant carter de vanne à l'intérieur duquel est logée une vanne 62 de sécurité. La vanne de sécurité se présente sous la forme d'un corps creux qui présente une entrée d'air E62 et une sortie d'air S62.

La vanne de sécurité est mobile de préférence à pivotement entre :
- une position dite d'ouverture dans laquelle l'entrée d'air E62 de la vanne de sécurité est en communication avec la sortie d'air comprimé du dispositif de génération 2 d'air comprimé, par l'intermédiaire de l'entrée d'air E61 du carter 61, tandis que la sortie d'air S62 de la vanne de sécurité est en communication avec le conduit 3 de transmission, par l'intermédiaire de la sortie S63 du carter 61 (Figure 3), et
- une position dite de fermeture (ou d'échappement) dans laquelle la sortie d'air S62 de la vanne de sécurité est en communication avec une sortie S64 d'échappement ménagée dans le carter 61, le corps de la vanne de sécurité obturant alors la sortie S63 du carter 61 et donc l'entrée du conduit 3 de transmission (Figure 2).

Avantageusement, la vanne 62 de sécurité comprend une manette attachée au corps de la vanne de sécurité qui permet à l'utilisateur de déplacer manuellement la vanne de sécurité entre la position d'échappement qui permet d'évacuer l'air comprimé sur le côté de l'engin sans entrainer l'outil de coupe, et la position d'ouverture qui autorise le passage d'air comprimé dans le conduit 3 de transmission.

Ainsi, au démarrage du moteur de l'engin, l'utilisateur peut positionner la manette de la vanne de sécurité en position de fermeture/échappement pour que l'outil de coupe soit à l'arrêt. Puis, l'utilisateur peut amener la manette de la vanne de sécurité en positon d'ouverture pour orienter le flux d'air comprimé vers le conduit 3 de transmission tout en obstruant la sortie d'échappement du carter 61.

### Système de soupape

La débroussailleuse 1 comprend un système 5 de soupape de sécurité qui est disposé au niveau du conduit 3 d'amenée d'air comprimé. Le système 5 de soupape est disposé en amont de la sortie du conduit 3 d'amenée qui communique avec le dispositif de coupe 4.

Le système 5 de soupape est configuré pour laisser s'échapper l'air lorsque la pression d'air dans le conduit 3, au niveau du système 5 de soupape, est supérieure à une valeur seuil donnée. Le système 5 de soupape de sécurité permet ainsi, en cas de surpression, d'orienter le flux d'air en sortie directe, radialement hors du conduit 3, et de préférence hors du corps tubulaire 13 présenté ci-après, et ce avant le dispositif de coupe 4, ce qui permet le débrayage du dispositif de coupe 4 en cas de choc.

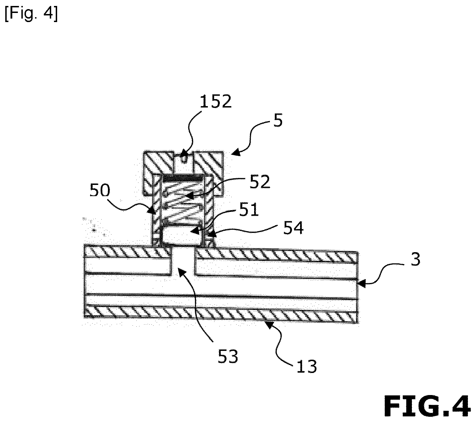

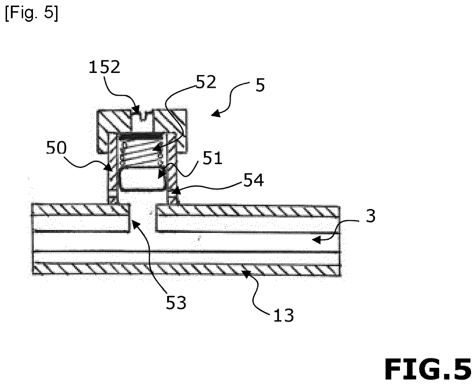

Dans le mode de réalisation illustré plus particulièrement à la Figure 4 et à la Figure 5, le système 5 de soupape de sécurité comprend un cylindre 51 (en variante, on peut prévoir une bille) qui est rappelée par un ressort 52 en position de fermeture d'un orifice 53 de passage d'air ménagé dans le conduit 3 d'amenée d'air comprimé et de fermeture d'un ou plusieurs orifices 54 d'évacuation d'air ménagé dans une chambre 50 logeant le cylindre 51 et le ressort 52. Ainsi, lorsque le cylindre 51 est en position basse (fermée), il n'y a pas d'évacuation de l'air comprimé par le ou les orifices 54 à l'extérieur de l'engin. Lorsque le cylindre 51 est en position haute (ouverte) l'air comprimé s'évacue par le ou les orifices 54 hors de l'engin.

Le système 5 de soupape de sécurité comprend aussi une vis 152 de réglage de pression associée au ressort pour permettre de régler la pression à partir de laquelle le cylindre laisse l'air s'échapper. Une rondelle est placée entre la vis et le ressort afin d'assurer une meilleure homogénéité du serrage de la vis et d'éviter que la vis ne tourne dans le vide central du ressort.

Ainsi, lorsque le dispositif de coupe est bloqué, la surpression d'air comprimé s'échappe par le système de soupape ouvert, par le ou les orifices 54 situés à proximité de la base de la chambre 50 qui loge le cylindre 51 et le ressort 52.

### Corps de l'engin

Comme illustré à la Figure 1, le conduit 3 s'étend à l'intérieur d'un corps tubulaire 13 qui est raccordé à un carter 14 de protection du dispositif de coupe. Le corps tubulaire 13 forme une partie du corps de la débroussailleuse.

Le carter 14 de protection loge au moins partiellement le dispositif de coupe 4. Selon un aspect particulier, ledit carter 14 de protection est muni d'une sortie d'air 142 orientée de manière ortho-radiale par rapport à l'axe de rotation du dispositif de coupe 4.

Selon un autre aspect non illustré aux figures, la débroussailleuse 1 comprend un dispositif de préhension, pour une préhension de l'engin par un utilisateur, qui est raccordé au corps tubulaire 13 de l'engin du côté opposé au carter 14 de protection.

Le dispositif de préhension est muni de moyens de contrôle du moteur, tel qu'un système de commande par gâchette.

Avantageusement, le dispositif de préhension comprend un guidon ou un anneau de préhension pour l'utilisateur.

### Dispositif de coupe rotatif

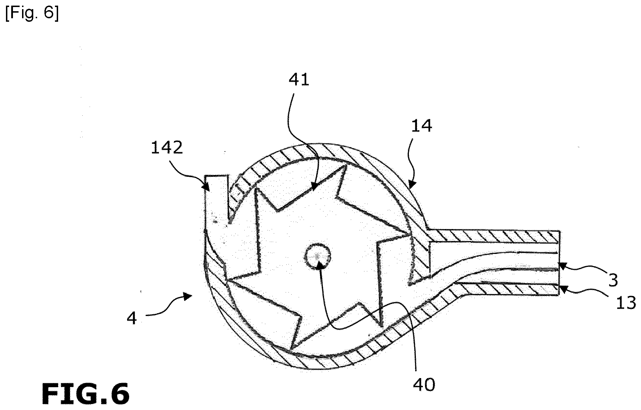

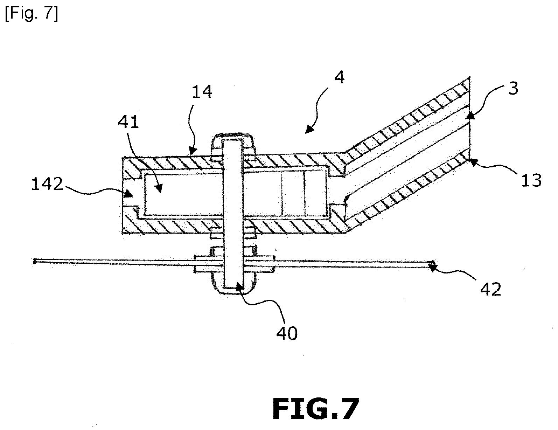

Comme illustré plus particulièrement à la Figure 6 et à la Figure 7, le dispositif de coupe rotatif 4 comprend un dispositif à pales 41, qui forme une turbine, entrainable par l'air comprimé issu du conduit 3, et un outil de coupe 42, couplé à la turbine 41, pour être entrainé en rotation par la turbine 41 par l'intermédiaire d'un arbre d'entrainement 40. L'outil de coupe 42 peut comprendre une ou des lames de coupe, par exemple en métal ou en plastique.

La présence du conduit 3 (ou tube), qui forme une colonne d'amenée d'air comprimé, et d'une soupape de gestion de la pression d'air formée par le système 5, permet comme expliqué ci-avant d'obtenir une souplesse d'enclenchement et de déclenchement de l'outil de coupe 42.

L'invention n'est pas limitée aux modes de réalisation illustrés dans les dessins.

De plus, le terme « comprenant » n'exclut pas d'autres éléments ou étapes. En outre, des caractéristiques ou étapes qui ont été décrites en référence à l'un des modes de réalisation exposés ci-dessus peuvent également être utilisées en combinaison avec d'autres caractéristiques ou étapes d'autres modes de réalisation exposés ci-dessus.

## Revendications

1. Engin (1) de coupe à coupe rotative, tel qu'une débroussailleuse, comportant :
- un dispositif de génération (2) d'air comprimé;
- un conduit (3) d'air comprimé situé en aval du dispositif de génération (2) d'air comprimé; et
- un dispositif de coupe (4) rotatif entrainable en rotation par l'air comprimé issu du conduit (3) d'air comprimé ;
**caractérisé en ce que** l'engin comprend un dispositif (6) de sélection d'orientation du flux d'air comprimé, ledit dispositif étant interposé entre le dispositif de génération (2) d'air comprimé et le conduit (3) de transmission, et configuré pour permettre de guider le flux d'air comprimé qui sort du dispositif de génération (2) d'air comprimé :
- soit vers le conduit (3) de transmission pour entraîner en rotation le dispositif de coupe (4),
- soit hors de l'engin sans entraîner en rotation le dispositif de coupe (4).

2. Engin selon la revendication 1, dans lequel ledit dispositif de génération (2) d'air comprimé comprend un moteur (21) et un compresseur.

3. Engin (1) selon la revendication 2, dans lequel ledit engin comprend un embrayage disposé entre le moteur (21) et le compresseur.

4. Engin (1) selon l'une des revendications 2 ou 3, dans lequel ledit compresseur comporte :
- un rotor à pales (22), encore appelé turbine, couplé à un arbre (211) de sortie du moteur (21); et
- une chambre de compression (24) logeant le rotor à pales (22) et présentant une entrée d'air et une sortie d'air.

5. Engin selon l'une des revendications 2 à 4, dans lequel ledit compresseur est un compresseur axial.

6. Engin selon l'une des revendications 1 à 4, dans lequel, ledit dispositif de génération d'air comprimé comprenant un moteur et un compresseur, ledit compresseur est un compresseur à pompe comportant un axe muni d'un vilebrequin couplé à un arbre de sortie du moteur sur lequel est fixé une bielle configurée pour actionner un piston dans une chambre de compression présentant une entrée et une sortie d'air.

7. Engin selon l'une des revendications précédentes, dans lequel le dispositif de coupe rotatif (4) comprend :
- un dispositif à pales (41) entrainable par l'air comprimé issu du conduit (3) d'amenée; et
- un outil de coupe (42) couplé à la turbine pour être entrainé en rotation par la turbine.

8. Engin (1) selon l'une des revendications précédentes, dans lequel ledit engin comprend un système (5) de soupape de sécurité, disposé en amont de la sortie du conduit (3) qui communique avec le dispositif de coupe, et configuré pour laisser s'échapper l'air lorsque la pression d'air est supérieure à une valeur seuil donnée.

9. Engin (1) selon la revendication 8, dans lequel ledit système (5) de soupape de sécurité comprend un organe, tel qu'une bille ou un cylindre (51), rappelé par un ressort (52) en position de fermeture d'au moins un orifice (53, 54) de passage d'air ménagé dans le conduit (3) d'air comprimé et/ou dans une chambre (50) communiquant avec le conduit (3) d'air comprimé et logeant le cylindre (51) et le ressort (52).

10. Engin (1) selon l'une des revendications précédentes, dans lequel ledit conduit (3) d'air comprimé présente une longueur au moins égale à 140 cm.

11. Engin (1) selon l'une des revendications précédentes, dans lequel ledit engin (1) comprend un carter (14) de protection dans lequel est logé au moins partiellement le dispositif de coupe (4), ledit carter (14) de protection étant muni d'une sortie d'air (142) ortho-radiale par rapport à l'axe de rotation du dispositif de coupe (4).

12. Engin (1) selon l'une des revendications précédentes, dans lequel ledit engin (1) comprend aussi un corps tubulaire (13) qui est raccordé au carter (14) de protection et dans lequel le conduit (3) d'air s'étend.

13. Engin (1) selon les revendications 8 et 12, dans lequel ledit engin (1) comprend un dispositif de préhension, pour une préhension de l'engin par un utilisateur, fixé sur ledit corps tubulaire (13) de l'engin entre le dispositif (6) de sélection d'orientation du flux d'air comprimé et le système (5) de soupape de sécurité.
